# EUROPÄISCHE PATENTSCHRIFT

(11) **EP 1 845 214 B1**
(45) Veröffentlichungstag und Bekanntmachung des Hinweises auf die Patenterteilung: **18.02.2009**
(21) Anmeldenummer: 07112023.2
(22) Anmeldetag: 14.12.2005
(51) Int. Cl.: E04B 1/76

(54) **Verfahren zur Installation von Dämmplatten**
Procedure for mounting insulation panels
Procédé pour le montage de panneaux d'isolation

(30) Priorität: 14.12.2004 DE 102004060390
(43) Veröffentlichungstag der Anmeldung: 17.10.2007
(62) Teilanmeldung aus: 05027340.8
(73) Patentinhaber: Brillux GmbH & Co. KG, 48163 Münster (DE)
(72) Erfinder: Krechting, Andreas, 48163, Schöppingen (DE)
(74) Vertreter: Cohausz & Florack

(56) Entgegenhaltungen:
- EP-A- 0 919 674
- WO-A-93/13277
- DE-A1- 3 510 945

## Beschreibung

Die vorliegende Erfindung betrifft ein Fixiermittel zum Fixieren einer Dämmplatte auf einem Untergrund, wobei das Fixiermittel zwei winklig, insbesondere rechtwinklig zueinander angeordnete Schenkel aufweist, wobei zum Fixieren der Dämmplatte der erste Schenkel an dem Untergrund befestigbar ist und der zweite Schenkel an der Dämmplatte befestigbar ist.

Derartige Fixiermittel eignen sich beispielsweise bei der Wärmedämmung von Gebäuden, wobei die Dämmplatten auf Außenwänden eines Gebäudes befestigt werden. Derartige Dämmplatten werden auch zur Innendämmung eingesetzt. Ein Anwendungsbeispiel in dieser Hinsicht ist die Wand- oder Deckendämmung beispielsweise von Kellerräumen. Es ist auch möglich, derartige Dämmplatten im Zuge einer Fertigbauweise oder Holzrahmenbauweise vorzusehen. Dabei können die Dämmplatten insbesondere bereits vorgefertigt sein. Auch zur Sanierung oder Überdämmung von schadhaften Dämmsystemen kommen derartige Dämmplatten zum Einsatz.

Durch die Dämmplatten wird insbesondere ein Wärmedämm-Verbundsystem (WDVS) geschaffen. Bei der Dämmung von Gebäuden mit Wärmedämm-Verbundsystemen an Alt- und Neubauten werden die Dämmplatten in der Regel mit mineralisch gebundenen bzw. mineralisch gebundenen und organisch vergüteten Klebemitteln der Bindemittelbasis Kalk / Zement am Untergrund verklebt. Die Klebemittel werden als Sackware oder in einem Silo zum Einsatzort (Baustelle oder industrielle Fertigung) angeliefert und dort vor der Verarbeitung mit Wasser gemischt. Das Mischen kann beispielsweise von Hand, mit einem Rührwerk oder mit Durchlauf- bzw. Zwangsmischern erfolgen.

Üblicherweise im Anschluss wird das Klebemittel in der Regel von Hand, seltener auch unter Verwendung einer Förderpumpe maschinell, auf die Dämmplatten aufgetragen. Danach erfolgt das Verkleben der Dämmplatten auf dem Untergrund, indem die Dämmplatten mit ihrer zu verklebenden Fläche mit dem Untergrund in Kontakt gebracht werden. Das Klebemittel vermittelt dabei den Kontakt zwischen den Dämmplatten und dem Untergrund. Gelegentlich wird der Kleber auch unter Verwendung einer Förderpumpe auf den Untergrund aufgespritzt. In diesem Fall werden die Dämmplatten in das nasse Kleberbett eingelegt. Anschließend wird das Klebemittel ausgehärtet.

In vereinzelten Fällen werden auch organisch gebundene Klebemassen verwendet, denen zur Abbindung Zement vor der Verarbeitung zugegeben wird. Diese werden in der Regel von Hand auf die Dämmplatten, gelegentlich auch auf den Untergrund, aufgetragen.

Auch das Verkleben von Dämmplatten mit organisch gebundenen Klebemassen ohne Zementzugabe ist möglich. Diese Klebemassen werden dann wiederum von Hand oder unter Verwendung von Förderpumpen maschinell auf die Dämmplatten oder den Untergrund aufgetragen.

Die üblicherweise zur Anwendung kommenden Klebematerialien sind beispielsweise beschrieben in Merkblatt Nr. 21 des Bundesausschusses für Farbe und Sachwertschutz (BFS), "Technische Richtlinien für die Verarbeitung von Wärmedämm-Verbundsystemen", Stand Oktober 1995, Absätze 2.3.1 und 2.4.1.

Im genannten Merkblatt Nr. 21 ist in Absatz 2.5.2.1 außerdem der Auftrag des Klebemittels auf der Dämmplatte beschrieben. In der vom Fachverband Wärmedämm-Verbundsysteme E. V. herausgegebenen Technischen Systeminfo Nr. 3: "Wärmedämm-Verbundsysteme zum Thema Systemvielfalt", Seite 7, sind weiterhin mögliche Materialien und Verfahren zum Verkleben von Dämmplatten beschrieben.

Zur Zeit werden allein in Deutschland jährlich ca. 30 Mio. Quadratmeter Dämmplatten verklebt. Mit den bislang üblichen Verklebeverfahren müssen jährlich somit allein in Deutschland ca. 120 - 150 Mio. kg Klebemittel produziert, transportiert, in der Regel angemischt und verarbeitet werden.

Damit ist ein sehr hoher logistischer und zeitlicher Aufwand verbunden, der wiederum zu einem hohen Kostenaufwand führt. Hinzu kommt, dass die bekannten Klebemittel eine vergleichsweise lange Zeit zum Aushärten, beispielsweise durch Trocknung, benötigen. So sind vor einer möglichen Weiterbearbeitung eines WDVS, beispielsweise in Form von Schleifen oder Verdübeln und Armieren des Dämmstoffbelages, Wartezeiten von üblicherweise mindestens drei Tagen erforderlich. Dies vermindert die Produktivität der bekannten Verklebeverfahren.

Auf zahlreichen Untergründen, insbesondere bei auf Altbauten oder in Kellerräumen vorzufindenden Altanstrichen, besteht zudem bei zementhaltigen und/oder wasserbeinhaltenden bzw. wasserbasierenden Klebern die Gefahr, dass unerwünschte Wechselwirkungen zwischen dem Klebemittel und dem Untergrund in Form einer Verseifung oder durch Aufweichen stattfinden. Eine Verseifung tritt dann auf, wenn vorhandene Altanstriche nicht alkalibeständig sind und von der hohen Alkalität eines zementhaltigen Klebemittels zerstört werden. Wenn Anstriche nicht ausreichend feuchtigkeitsresistent sind, können sie auch unter Einfluss des Wasseranteils im Kleber aufweichen. Beides kann zur Folge haben, dass ein Verlust der Verbundhaftung zwischen Kleber und Untergrund auftritt. Das WDVS weist somit ebenfalls eine mangelnde Verbundhaftung auf. Als Folge können hieraus Schäden am WDVS auftreten, die bis zu einem Verlust der Standsicherheit führen können.

Ausgehend von dem erläuterten Stand der Technik lag der Erfindung die Aufgabe zugrunde, den Kostenaufwand, insbesondere den logistischen und zeitlichen Aufwand, beim Verkleben von Dämmplatten mit einem Untergrund zu verringern und gleichzeitig die Produktivität zu erhöhen. Außerdem soll ein sicheres Verkleben ohne die Gefahr von Schäden am Wärmedämm-Verbundsystem erreicht werden.

Diese Aufgabe wird erfindungsgemäß gelöst durch ein Fixiermittel zum Fixieren einer Dämmplatte auf einem Untergrund, wobei das Fixiermittel zwei winklig, insbesondere rechtwinklig, zueinander angeordnete Schenkel aufweist, wobei zum Fixieren der Dämmplatte der erste Schenkel an dem Untergrund befestigbar ist, und der zweite Schenkel an der Dämmplatte befestigbar ist, wobei der zweite Schenkel wenigstens eine im wesentlichen parallel zur Außenkante des Schenkels verlaufende Sollbruchkante aufweist.

Das erfindungsgemäße Fixiermittel kann insbesondere zur Installation von Dämmplatten verwendet werden. Insbesondere findet das erfindungsgemäße Fixiermittel Anwendung in einem Verfahren zum Anbringen von mindestens einer Dämmplatte an einen Untergrund, umfassend die Schritte Bereitstellen eines Klebeschaums, Aufbringen des Klebeschaums auf eine zu verklebende Fläche der Dämmplatte und/oder auf den mit der Dämmplatte zu verklebenden Untergrund, in Kontakt bringen der zu verklebenden Fläche der Dämmplatte mit dem Untergrund, Aushärten des zwischen der Dämmplatte und dem Untergrund befindlichen Klebeschaums.

Bei einem derartigen Verfahren wird Schaum eingesetzt, der eine gute Klebekraft aufweist.

Der Schaum wird daher als Klebeschaum bezeichnet. Durch den Einsatz bzw. die Verwendung von Klebeschaum kann das Verkleben der Dämmplatten mit dem Untergrund mit einem geringen Kostenaufwand durchgeführt werden. So ist der Transport der Klebeschäume im Vergleich zu konventionellen Klebemitteln schneller und kostengünstiger möglich. Ein Anmischen der Klebemittel am Einsatzort entfällt ebenfalls, da die Klebeschäume bereits in ihrer für das Verkleben benötigten Zusammensetzung an den Einsatzort geliefert werden können. Die Verarbeitung des Klebeschaums ist somit schnell, sauber und einfach durchzuführen. Hinzu kommt, dass der eingesetzte bzw. verwendete Klebeschaum schneller aushärtet als konventionelle Klebemittel, so dass eine schnelle Weiterbearbeitung des Wärmedämm-Verbundsystems möglich ist. Die Produktivität beim Verkleben von Dämmplatten mit einem Untergrund ist somit erhöht.

Mit Klebeschaum entstehen außerdem keine in Bezug auf die Verbundhaftung nachteiligen Wechselwirkungen mit dem Untergrund. Es wird somit ein sicheres Verkleben und eine zuverlässige Verbundhaftung des Wärmedämm-Verbundsystems erreicht. Die Gefahr von Beschädigungen des WDVS ist erfindungsgemäß somit erheblich verringert. Außerdem werden durch den Einsatz eines Klebeschaums die Dämmeigenschaften des Wärmedämm-Verbundsystems gegenüber dem Stand der Technik verbessert.

Es ist bei dem beschriebenen Verfahren grundsätzlich möglich, das Verarbeiten des Klebeschaums per Hand oder maschinell durchzuführen. Bei einer maschinellen Verarbeitung wird der Klebeschaum in der Regel über einen Schlauch auf die zu verklebenden Flächen gefördert.

Als zu verklebende Dämmplatten kommen grundsätzlich sämtliche bekannten Dämmplatten in Frage, die in Wärmedämm-Verbundsystemen oder anderen Dämmsystemen eingesetzt werden können. Dies gilt unabhängig von ihrer Güte (z.B. Festigkeit, Gewicht, Rohdichte, Lambda-Rechenwert, Farbe), der Schichtdicke oder dem Format (Länge und Breite), der Kantenausführung oder der Oberflächenbeschaffenheit. Beispielhaft für mögliche Plattenmaterialien genannt werden in dieser Hinsicht Expandierter Polystyrol-Hartschaum (EPS, Blockgeschäumt oder als Automatenware), Extrudierter Polystyrol-Hartschaum (XPS), Polyurethanschaum (PUR), Polyisicyanurat (PIR), Mineralwolle und Steinwolle (auch in Lamellenform), Mineralschaum (Kalzium-Silikat), Phenolharz (PF)-Hartschaum, Holzwolle, Holzweichfaser, Kork, Hanf, Schafswolle, etc.. Es ist dabei möglich, dass die Dämmplatten als Dampfbremse eine Beschichtung oder Kaschierung, insbesondere einseitig, beispielsweise aus Kunststoff oder Aluminium aufweisen. Selbstverständlich kann durch die Dämmplatten alternativ oder zusätzlich zur Wärmedämmung auch ein verbesserter Schalldämmwert erreicht werden.

Bei dem beschriebenen Verfahren ist die Reihenfolge der Verfahrensschritte nicht festgelegt. Dies gilt insbesondere für die Schritte des Aufbringens des Klebeschaums und des Inkontaktbringens der Dämmplatte mit dem Untergrund.

So kann der Klebeschaum vor dem in Kontakt bringen der zu verklebenden Fläche der Dämmplatte mit dem Untergrund auf eine zu verklebende Fläche der Dämmplatte und/oder auf den mit der Dämmplatte zu verklebenden Untergrund aufgebracht werden. Auf diese Weise kann in an sich bekannter Weise das Aufbringen des Klebemittels in besonders einfacher Weise erfolgen.

Der Klebeschaum kann dabei zum Verkleben der Dämmplatten auf die jeweils zu verklebende Dämmplatte aufgetragen werden. Das Auftragen kann beispielsweise gemäß der bekannten Randwulst-Punktmethode erfolgen. Anschließend wird die Dämmplatte mit ihrer zu verklebenden Fläche mit dem Untergrund in Kontakt gebracht. Es ist jedoch auch möglich, den Klebeschaum vor dem in Kontakt bringen der Dämmplatte mit dem Untergrund auf dem Untergrund aufzubringen. Natürlich ist es ebenfalls möglich, den Klebeschaum sowohl auf der Dämmplatte als auch auf dem Untergrund aufzubringen, um eine noch gleichmäßigere und vollständigere Verteilung des Klebemittels zwischen Dämmplatte und Untergrund zu erreichen.

Es ist auch denkbar, dass der Klebeschaum nach dem in Kontakt bringen der zu verklebenden Fläche der Dämmplatte mit dem Untergrund auf eine zu verklebende Fläche der Dämmplatte und/oder auf den mit der Dämmplatte zu verklebenden Untergrund aufgebracht wird. Die Dämmplatte befindet sich in diesem Fall bereits in ihrer für das Verkleben vorgesehenen Position auf dem Untergrund. Der Klebeschaum wird also zwischen den Untergrund und die auf diesem bereits angeordnete Dämmplatte gebracht. Auf diese Weise kann ein vorzeitiges Aushärten des Klebeschaums sicher verhindert werden. Außerdem kann der Klebeschaum so sicher und präzise in der erforderlichen Menge aufgebracht werden. Bei dieser Ausgestaltung kann die Dämmplatte insbesondere mit Abstand auf dem Untergrund angebracht werden. In den durch den Abstand zwischen der Dämmplatte und dem Untergrund gebildeten Raum kann dann der Klebeschaum gebracht werden.

Um das Aufbringen des Klebeschaums zwischen die Dämmplatte und den Untergrund in einfacher Weise zu ermöglichen, kann der Klebeschaum mittels einer Injiziereinrichtung zwischen die zu verklebende Fläche der Dämmplatte und den Untergrund injiziert werden. Dazu kann der Klebeschaum beispielsweise über ein durch die Dämmplatte gestoßenes Spritzrohr gefördert werden. Werden mehrere Dämmplatten verklebt, kann das Injizieren des Klebeschaums auch durch zwischen benachbarten Dämmplatten vorgesehene Fugen erfolgen. Es ist dabei zum Erreichen einer ordnungsgemäßen Verklebung möglich, dass der Klebeschaum an festgelegten, in regelmäßigen Abständen vorgesehenen Orten zwischen die Dämmplatte und den Untergrund injiziert wird. Von der Injiziereinrichtung oder vorzugsweise bereits vorher eingebrachte Löcher in der Dämmplatte können geschlossen werden, indem die Injiziereinrichtung beim Herausziehen aus der Dämmplatte weiter Schaum ausbringt.

Der Klebeschaum kann auch in komprimierter Form bereitgestellt werden. Der Klebeschaum expandiert in diesem Fall erst beim Austritt aus dem Aufbewahrungsbehälter und beim Auftragen auf die zu verklebende Fläche vor Ort. Durch eine solche Ausgestaltung kann der logistische Aufwand weiter verringert werden, da das zu transportierende Volumen von Klebeschaum weiter verringert wird. In besonderer Weise geeignet sind dabei sogenannte "Ort-Schäume", die erst am Verwendungsort verarbeitet werden. Für eine besonders einfache Verarbeitung, und um die Nachexpansion des aufgebrachten Klebeschaums zu begrenzen, kann der Schaum insbesondere schwachexpandierend sein. Vorzugsweise weist er dabei eine maximale nachträgliche Schaumexpansion von 1 bis 30 %, insbesondere von 5 bis 20 %, speziell 8 bis 15 % auf.

Als besonders geeignet erweisen sich sogenannte teilkollabierende Klebeschäume. Bei diesen verringert sich das Volumen des auf die Dämmplatte bzw. den Untergrund aufgetragenen Schaums innerhalb eines bestimmten Zeitintervalls um einen bestimmten Prozentsatz. Bevorzugt werden solche Schäume verwendet, bei denen die Volumenreduktion 1 bis 30 %, vorzugsweise 5 bis 20 % und speziell 7 bis 15 % beträgt. Die Volumenreduktion erfolgt dabei bevorzugt innerhalb von 1 bis 30 Sekunden, vorzugsweise 3 bis 20 Sekunden und speziell 5 bis 10 Sekunden. Wie jeder Klebeschaum, vergrößern auch teilkollabierende Klebeschäume ihr Volumen während des Aushärteprozesses allmählich. Es hat sich hierbei gezeigt, dass teilkollabierende Klebeschäume beim Aushärten eine geringere Volumenexpansion aufweisen, was sich vorteilhaft bei der Befestigung der Dämmplatten auswirkt. Bevorzugt werden Klebeschäume eingesetzt, deren Volumenexpansion von ungehärtetem zum vollständig ausgehärtetem Zustand maximal 30 %, insbesondere maximal 20 % und besonders bevorzugt maximal 5 bis 10 % beträgt.

Der besondere Vorteil dieser Klebeschäume besteht darin, dass ein unkontrolliertes Abdrücken der Dämmplatte vom Untergrund oder ein nachträgliches Ausbeulen der Dämmplatte in jedem Falle vermieden wird.

Grundsätzlich sind sämtliche bekannten Verfahren zum Aushärten von Klebemitteln möglich.

In Abhängigkeit von dem verwendeten Klebeschaum kann der Klebeschaum in besonders einfacher Weise über eine Trocknungszeit ausgehärtet werden. Es ist somit kein weiterer Bearbeitungsschritt für das Aushärten erforderlich. Es muss lediglich die im Vergleich zum Stand der Technik verkürzte Trocknung des Klebeschaums abgewartet werden.

Es ist jedoch auch denkbar, den Klebeschaum durch UV-Bestrahlung auszuhärten. Auf diese Weise kann die erforderliche Zeit zum Aushärten weiter verkürzt werden. Die UV-Bestrahlung kann dabei alternativ oder zusätzlich zum Aushärten über eine Trocknungszeit eingesetzt werden.

Grundsätzlich ist es auch denkbar, sämtliche bekannten Einkomponenten-Klebeschäume oder Mehr-, insbesondere Zweikomponenten-Klebeschäume einzusetzen. Insbesondere bei einer maschinellen Verarbeitung des Schaums kommen bevorzugt Zweikomponenten-Klebeschäume zum Einsatz. Zur Kontrolle bei der Verarbeitung und zur Prüfung ob der korrekte Klebeschaum eingesetzt wurde kann der Klebeschaum eingefärbt werden.

Ferner kann ein organischer Klebeschaum eingesetzt werden. Organische Klebeschäume zeichnen sich durch eine besonders gute Klebkraft und Verarbeitbarkeit aus.

Es ist dabei insbesondere denkbar, einen Klebeschaum auf Basis von Polyurethan einzusetzen. Derartige PUR-Schäume werden in großen Mengen produziert und sind kostengünstig zu beschaffen. Außerdem weisen diese Schäume eine besonders gute Klebkraft und Verarbeitbarkeit auf.

Je nach den gewünschten Eigenschaften des Klebeschaums ist es jedoch auch denkbar, andere Ein- oder Mehr-, insbesondere Zweikomponentenschäume, einzusetzen, beispielsweise auf Basis von Phenolharz (PF), Latex, Polyethylen, Polyester, Polyisicyanurat (PIR) etc..

Der Klebeschaum kann ferner eine Wärmeleitfähigkeit in einem Bereich von 0,020 bis 0,060 W/ (m·K) aufweisen. Die Angabe der Wärmeleitfähigkeit erfolgt dabei gemäß der Norm DIN 52 612. Durch eine solche Wärmeleitfähigkeit werden die Dämmeigenschaften des Wärmedämm-Verbundsystems weiter verbessert.

Gemäß einer weiteren Ausgestaltung kann der Klebeschaum eine Druckspannung bei 10% Stauchung in einem Bereich von 3 bis 500 kPa aufweisen. Die Angabe der Druckspannung erfolgt gemäß der Norm ISO 844. Durch diese Ausgestaltung kann der Klebeschaum optimal auf die Belastbarkeit des Wärmedämm-Verbundsystems abgestimmt werden.

Der Klebeschaum kann weiterhin im geschäumten Zustand eine Rohdichte in einem Bereich von 10 bis 300 kg/m³ aufweisen. Durch eine solche Rohdichte kann der Klebeschaum in weiter optimierter Weise auf die Belastbarkeit des Wärmedämm-Verbundsystems abgestimmt werden.

Andere in Bezug auf den Betriebseinsatz vorteilhafte Eigenschaften erzeugende Kennwerte des Klebeschaums sind eine Zugfestigkeit gemäß DIN 53 455 von 10 bis 700 kPa, eine Reißdehnung gemäß DIN 53 455 von 5 bis 50%, eine Scherfestigkeit gemäß DIN 53 422 von 15 bis 300 kPa sowie eine Temperaturbeständigkeit von -40°C bis +130°C. Bezüglich der Baustoffklasse bzw. des Brandverhaltens haben sich insbesondere die Werte bzw. Klassifizierungen A1, A2, B1, B2, B3 bzw. A1, A2, B, C, D, E, F gemäß der Norm 4102-1 bzw. der Norm DIN EN 13501-1 als vorteilhaft erwiesen.

Der Klebeschaum kann grundsätzlich in sämtlichen geeigneten Behältern mit einer an den Verwendungszweck angepassten Größe bereitgestellt werden.

Ferner kann der Klebeschaum in Kunststoff- oder Metalldosen bereitgestellt werden. Auf diese Weise ist der Transport und die Verarbeitung in besonders einfacher Weise möglich. Dies gilt insbesondere, wenn der Klebeschaum in komprimierter Form bereitgestellt wird. Bei dem Metall kann es sich in bekannter Weise um Weißblech oder Aluminium handeln. Derartige Dosen können beispielsweise einen Schraubverschluss aufweisen, der auf eine handelsübliche Ausbringpistole aufgeschraubt werden kann. Denkbar ist jedoch auch die Abfüllung und Belieferung in Dosen mit Ausbringröhren. Die Ausbringröhren können insbesondere zum einmaligen Gebrauch, aber auch zum mehrmaligen Gebrauch vorgesehen sein. Bei einer Injektion des Klebeschaums nach dem in Kontakt bringen der Dämmplatte mit dem Untergrund können die Ausbringpistole bzw. die Ausbringröhre entsprechend ein Spritzrohr zur Injektion des Klebeschaums aufweisen. Grundsätzlich sind in Abhängigkeit von dem Einsatzzweck sämtliche Dosengrößen denkbar.

Das erfindungsgemäße Fixiermittel eignet sich hervorragend zur Fixierung der jeweils zu verklebenden Dämmplatte auf dem Untergrund. Auf diese Weise wird eine präzise Fixierung der Dämmplatten in der gewünschten Position relativ zum Untergrund und zu den benachbarten Platten ermöglicht. Insbesondere dient das erfindungsgemäße Fixiermittel der temporären Fixierung der Dämmplatten auf dem Untergrund, nämlich bis zum endgültigen Aushärten des Klebeschaums, welcher dann die Halte- und Fixierfunktion der Dämmplatten übernimmt.

Bei einem vor dem Aufbringen der Dämmplatte auf dem Untergrund erfolgenden Aufbringen des Klebeschaums auf die Dämmplatte bzw. den Untergrund wird verhindert, dass die verklebten Dämmplatten durch eine Expansion bzw. Nachexpansion des zwischen Dämmplatte und Untergrund befindlichen Klebeschaums ihre Lage verändern können. Durch eine Expansion bzw. Nachexpansion des Klebeschaums kann es, wie bereits erwähnt, insbesondere zu einem unkontrollierten Abdrücken der Dämmplatten von dem Untergrund kommen. Dies wird durch diese Ausgestaltung sicher dadurch vermieden, dass infolge der Fixierung der gewünschten Position der Dämmplatte relativ zum Untergrund und zu den benachbarten Platten eine gegebenenfalls erfolgende Expansion bzw. Nachexpansion ausschließlich parallel zum Untergrund erfolgt. Bei einem nach dem in Kontakt bringen der Dämmplatte mit dem Untergrund erfolgenden Aufbringen des Klebeschaums zwischen die Dämmplatte und den Untergrund stellt das Fixiermittel sicher, dass die Dämmplatte vor dem Aufbringen des Klebeschaums positionsgenau und sicher auf dem Untergrund gehalten wird. Nach dem Aufbringen des Klebeschaums zwischen die Dämmplatte und den Untergrund verhindert das Fixiermittel wiederum in sicherer Weise ein Abdrücken der Dämmplatte durch eine Nachexpansion des Klebeschaums senkrecht zum Untergrund. Grundsätzlich ist es denkbar, dass die Fixiermittel eine geringfügige, für die Funktion und Optik des Dämmsystems unkritische Bewegung der Platten zulassen.

Zweckmäßigerweise werden die Fixiermittel zusammen mit einem teilkollabierenden Klebeschaum eingesetzt. Hierbei wird das die Dämmplatte bis zum endgültigen Aushärten des Klebeschaums in Position haltenden Fixiermittel sowie die Verbindung des Fixiermittels mit dem Untergrund durch die nachträgliche Volumenverminderung des teilkollabierenden Klebeschaums mechanisch entlastet.

Mithilfe der Fixierelemente können die Dämmplatten beispielsweise an einer Gebäudefassade in sehr einfacher Weise absolut lotrecht und eben angebracht werden. Ferner können mittels der Fixierelemente auch Unebenheiten des Untergrundes ausgeglichen werden.

Das verwendete Fixiermittel kann aus den verschiedensten Werkstoffen, beispielsweise aus Metall oder einem polymeren Kunststoff, gefertigt sein.

Die Fixiermittel können wiederverwendbar ausgestaltet sein. Dazu können die Fixiermittel nach dem Aushärten des Klebeschaums gegebenenfalls von den Dämmplatten entfernt werden. Auch ein Entfernen der Fixiermittel ohne eine anschließende Wiederverwendung ist selbstverständlich denkbar.

Die Verbindung zwischen dem Fixiermittel und dem Untergrund erfolgt vorzugsweise ausschließlich durch Verkleben.

Das erfindungsgemäße Fixiermittel weist zwei winklig, insbesondere rechtwinklig, zueinander angeordnete Schenkel auf, wobei zum Fixieren der Dämmplatte der erste Schenkel an dem Untergrund befestigt wird, und der zweite Schenkel an der Dämmplatte befestigt wird. Mit winklig angeordneten Schenkeln ist das Fixieren der Dämmplatten auf dem Untergrund in besonders sicherer und einfacher Weise möglich. Sind die Schenkel im rechten Winkel angeordnet, so wird das Fixieren bei den üblicherweise verklebten quaderförmigen Dämmplatten weiter vereinfacht.

Werden die Dämmplatten beispielsweise auf einer Gebäudefassade angebracht, kann ein zwei winklig, insbesondere rechtwinklig, zueinander angeordnete Schenkel aufweisendes Fixiermittel in besonders zweckmäßiger Weise bei der Abstützung von Dämmplatten im Sturzbereich von Öffnungen, für die Anbringung der Dämmplatten oberhalb des Sockelbereiches oder auch seitlich bei der Detailausbildungen im Bereich von Fensterbänken o.ä. eingesetzt werden.

Der erste Schenkel kann mittels eines Klebemittels, insbesondere eines doppelseitig klebenden Klebebandes, an dem Untergrund befestigt werden. Die Befestigung des ersten Schenkels wird somit vereinfacht. Selbstverständlich sind dabei sämtliche geeigneten Klebemittel denkbar. Als besonders geeignet erweisen sich hochviskose Klebstoffe, insbesondere Gelkleber. Hierbei zeigen Gelkleber auf Acrylatbasis besonders gute Gebrauchseigenschaften. Die hohe Kleberschichtdicke dieser Klebertypen von mehreren Millimetern ermöglicht exzellente Kleberesultate sowohl auf glatten als auch auf strukturierten Untergründen.

Um eine besonders sichere und belastbare Befestigung des ersten Schenkels an dem Untergrund zu erreichen, ist es auch möglich, den ersten Schenkel mittels einer mechanischen Verankerung an dem Untergrund zu befestigen. Die mechanische Verankerung kann alternativ oder zusätzlich zu einem Verkleben des Schenkels erfolgen. Die mechanische Verankerung ist insbesondere vorteilhaft bei Untergründen, die sich nicht oder nur unzureichend für ein Verkleben eignen. Für die mechanische Verankerung eignen sich beispielsweise Nägel oder Schrauben, gegebenenfalls unter Verwendung von entsprechenden Dübeln.

In praktisch besonders einfacher Weise kann zum Befestigen des zweiten Schenkels an der Dämmplatte ein Stift, insbesondere ein Nagel, durch den zweiten Schenkel hindurch in die Dämmplatte eingedrückt werden. Der zweite Schenkel kann dazu eine geeignete Bohrung aufweisen. Auf diese Weise wird in einfacher Weise eine sichere Befestigung des zweiten Schenkels an der Dämmplatte erreicht. Bei dem Stift kann es sich insbesondere um einen Kunststoff- oder Metallstift, insbesondere einen Kunststoff- oder Metallnagel handeln. Grundsätzlich sind jedoch auch andere Befestigungsmittel denkbar.

Gemäß einer weiteren besonders praxisgemäßen Ausgestaltung kann der zweite Schenkel an der Dämmplatte befestigt werden, wenn der zweite Schenkel einen Dorn aufweist, der zum Befestigen des zweiten Schenkels an der Dämmplatte in die Dämmplatte eingedrückt wird. Der Dorn kann dazu insbesondere beweglich ausgestaltet sein. Bei den üblicherweise für die Dämmplatten eingesetzten Materialien ist das Eindrücken des Dorns in einfacher Weise möglich.

Das jeweilige Mittel zum Befestigen des zweiten Schenkels an der Dämmplatte gewährleistet eine sichere und belastbare Befestigung des zweiten Schenkels in der Dämmplatte und somit ein sicheres Fixieren der Dämmplatte auf dem Untergrund bis zum Abschluss der Schaumexpansion und Schaumaushärtung. Insbesondere kann dabei eine kraftschlüssige Verbindung zwischen zweitem Schenkel und Dämmplatte erreicht werden.

In besonders einfacher Weise kann der zweite Schenkel an einer seitlichen Kante der Dämmplatte befestigt werden. Auf diese Weise wird die Befestigung des Schenkels an der Dämmplatte insbesondere bei rechtwinklig angeordneten Schenkeln vereinfacht.

Dabei kann in der mit dem zweiten Schenkel zu befestigenden seitlichen Kante der Dämmplatte eine Vertiefung für den zweiten Schenkel vorgesehen werden. Die Vertiefung kann insbesondere den Abmessungen des zweiten Schenkels entsprechen. Es ist natürlich auch denkbar, die Vertiefung mit anderen Abmessungen als denen des Schenkels zu versehen, wenn dies zweckmäßig erscheint. So ist es möglich, die Vertiefung über die gesamte Fläche der mit dem zweiten Schenkel zu befestigenden seitlichen Kante der Dämmplatte vorzusehen. Auf diese Weise wird bei mehreren auf dem Untergrund verklebten Platten ein Spalt im Bereich der mit dem zweiten Schenkel zu befestigenden seitlichen Kante der Dämmplatte erzeugt. Eine solche Ausgestaltung erlaubt eine flexible Anpassung an unterschiedliche Fixiermittel. Durch das Vorsehen einer Vertiefung kann erreicht werden, dass der zweite Schenkel von der Oberfläche her im befestigten Zustand nicht sichtbar ist. Insbesondere wenn mehrere Dämmplatten verklebt werden, kann auf diese Weise trotz des zwischen den Kanten befindlichen zweiten Schenkels ein fugenloses Verkleben der Dämmplatten erfolgen. Es wird ein geschlossenes Fugenbild erreicht, so dass es nicht zu ungewollten Wärmeverlusten durch etwaige zwischen den Platten bestehende Fugen kommen kann. Sowohl das optische Erscheinungsbild als auch die technische Funktion des Dämmsystems können so verbessert werden.

Die Vertiefung kann beispielsweise durch ein Herausschmelzen oder Herausschneiden von Material aus den Dämmplatten erzeugt werden.

Gemäß einer weiteren praxisgemäßen Ausgestaltung können mehrere Dämmplatten mit dem Untergrund verklebt werden. So wird eine umfassende Dämmung beispielsweise eines Gebäudes erreicht.

Im Zuge einer Vereinfachung der Anbringung der Dämmplatten, aber auch unter Gesichtspunkten des Umweltschutzes ist es wünschenswert, die Zahl der einzusetzenden Fixiermittel zu begrenzen. Zu diesem Zweck kann es bei mehreren zu verklebenden Dämmplatten vorgesehen sein, dass jeweils zwei zu verklebende Dämmplatten durch mindestens ein gemeinsames Fixiermittel auf dem Untergrund fixiert werden. Die beiden zu verklebenden Dämmplatten sind dabei benachbart angeordnet. Durch eine solche Ausgestaltung kann die Zahl der benötigten Fixiermittel reduziert werden.

Das gemeinsame Fixiermittel weist zwei winklig, insbesondere rechtwinklig, zueinander angeordnete Schenkel auf, wobei zum Fixieren der Dämmplatten der erste Schenkel an dem Untergrund befestigt wird, und der zweite Schenkel an beiden Dämmplatten befestigt wird.

Dazu kann der zweite Schenkel an beiden Seiten des Schenkels angeordnete Befestigungsmittel, beispielsweise von beiden Seiten des Schenkels hervorragende Stifte, insbesondere Dorne, Nägel etc. aufweisen. Es ist dabei auch denkbar, dass nur ein Stift vorgesehen ist, der durch den Schenkel hindurchgeführt ist und somit von beiden Seiten des Schenkels hervorragt. Zur Fixierung wird in diesem Fall zunächst der zweite Schenkel an der ersten der beiden Dämmplatten durch Eindrücken des an der einen Seite des Schenkels vorgesehenen Befestigungsmittels in die Dämmplatte befestigt. Anschließend wird die zweite Dämmplatte mit einer ihrer Seiten weitgehend in Anlage mit der mit dem Schenkel befestigten Seite der ersten Dämmplatte gebracht und dabei das von der freien Seite des Schenkels hervorragende Befestigungsmittel in die zweite Dämmplatte eingedrückt. In diesem Fall ist der zweite Schenkel bei befestigten Dämmplatten also zwischen den benachbarten Dämmplatten angeordnet.

Gemäß einer alternativen Ausgestaltung ist es denkbar, dass der zweite Schenkel des gemeinsamen Fixiermittels die zu verklebenden Dämmplatten über die Grenze zwischen den benachbarten Dämmplatten hinweg übergreift.

Dazu können zum Befestigen des zweiten Schenkels an den Dämmplatten zwei Stifte, insbesondere zwei Nägel, durch den zweiten Schenkel hindurch in die beiden Dämmplatten eingedrückt werden. Der zweite Schenkel kann dazu zwei insbesondere entlang seiner Breite geeignet angeordnete Bohrungen aufweisen.

Auch kann der zweite Schenkel zwei Dorne aufweisen, die zum Befestigen des zweiten Schenkels an den beiden Dämmplatten in die Dämmplatten eingedrückt werden. Die Dorne können dabei insbesondere entlang der Breite des zweiten Schenkels angeordnet sein. Die Dorne können wiederum beweglich ausgestaltet sein.

Bei einem Verkleben mehrerer Dämmplatten können die Dämmplatten auf dem Untergrund mittels zumindest an ihren Längskanten vorgesehenen Verbindungsmitteln miteinander verbunden werden. So wird der Aufbau des Wärmedämm-Verbundsystems weiter erleichtert. Außerdem weisen die aufgeklebten Dämmplatten durch die Verbindungsmittel einen besseren Zusammenhalt auf.

Es ist möglich, dass alternativ oder zusätzlich zu den Längskanten auch an den Querkanten Verbindungsmittel vorgesehen sind.

Grundsätzlich können die Dämmplatten mittels sämtlicher bekannter Verbindungsmittel miteinander verbunden werden, beispielsweise einer Stufenfalz oder einer umlaufenden Nut.

Gemäß einer besonders praxisgemäßen Ausgestaltung können die Dämmplatten mittels einer Verzahnung miteinander verbunden werden. Dazu weisen miteinander zu verbindende Kanten der Dämmplatten als Verbindungsmittel entsprechende Verzahnungsmittel auf. Grundsätzlich kommen dazu sämtliche bekannten Verzahnungsmittel in Frage. So können die Verbindungsmittel beispielsweise mittels einer gezackten, einer gewellten, einer gerillten oder anders ausgebildeten Verzahnung miteinander verbunden werden.

Die Dämmplatten können auch mittels einer Nut- und Federverbindung miteinander verbunden werden. Dazu weisen miteinander zu verbindende Kanten der Dämmplatten als Verbindungsmittel entsprechend eine Nut bzw. Feder auf. Eine solche Ausgestaltung bewirkt eine besonders sichere Verbindung der Dämmplatten miteinander.

Grundsätzlich ist es möglich, verschiedene Verbindungsmittel miteinander zu kombinieren, wenn dies zweckmäßig erscheint.

Im Folgenden wird die Erfindung anhand eines in einer Zeichnung dargestellten Ausführungsbeispiels näher erläutert.
Es zeigen:
- Fig. 1: einen Ausschnitt eines schematischen Querschnitts von zwei mit einem Untergrund zu verklebenden Dämmplatten,
- Fig. 2: einen Ausschnitt eines schematischen Querschnitts von zwei mit einem Untergrund verklebten Dämmplatten gemäß einer ersten Ausgestaltung,
- Fig. 3: einen Ausschnitt eines schematischen Querschnitts von zwei mit einem Untergrund verklebten Dämmplatten gemäß einer zweiten Ausgestaltung,
- Fig. 4: ein Vergleichsfixiermittel zur Fixierung der Fig. 2 in perspektivischer Ansicht,
- Fig. 5a,b: ein erfindungsgemäßes Fixiermittel in zwei perspektivischen Ansichten und
- Fig. 6: einen Nagel zur Befestigung des Fixiermittels der Fig. 2 bis 4 an einer seitlichen Kante einer Dämmplatte

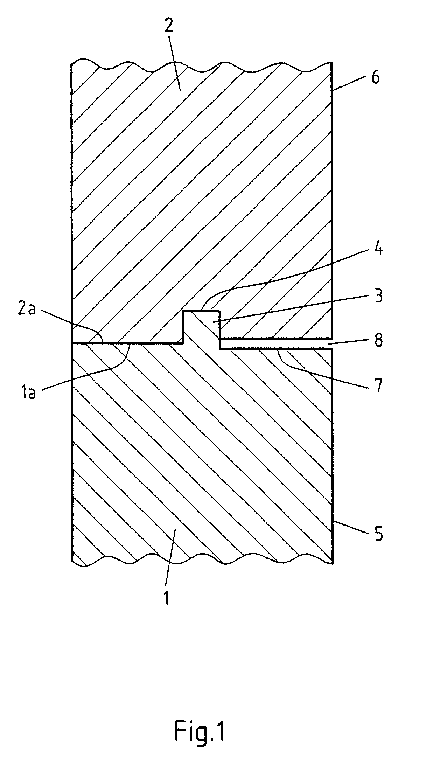

In Figur 1 sind eine erste Dämmplatte 1 und eine zweite Dämmplatte 2 ausschnittsweise in einem Querschnitt gezeigt. Im vorliegenden Fall bestehen die Dämmplatten 1, 2 aus einem Polystyrol-Hartschaum und sind quaderförmig. Als Formate kommen grundsätzlich sämtliche Formate in Frage. Beispielhaft genannt werden Breite zu Länge Verhältnisse von 500 x 1000 mm, 625 x 800 mm, 500 x 500 mm sowie 1000 bzw. 1200 mm x 200 mm. Mögliche Dicken der Dämmplatten liegen typischerweise in einem Bereich von 20 bis 400 mm. Andere Dicken sind jedoch möglich.

Die Dämmplatten 1, 2 weisen in Figur 1 dargestellte seitliche Kanten 1a, 2a, in diesem Fall Längskanten 1a, 2a, und nicht dargestellte kürzere Querkanten auf. Die Dämmplatte 1 weist an ihrer Längskante 1a eine Feder 3 auf, die zum Verbinden mit der Dämmplatte 2 in eine entsprechende, an der Längskante 2a der Dämmplatte 2 vorgesehene Nut 4 eingreift. An den nicht dargestellten Querkanten der Dämmplatten 1, 2 sind im vorliegenden Beispiel keine Verbindungsmittel vorgesehen, so dass diese stumpf mit benachbarten Dämmplatten aneinander stoßen können.

Werden quadratische Dämmplatten 1,2 vorgesehen, so können sämtliche Kanten Nut- und Federverbindungsmittel 3, 4 aufweisen. Es ist jedoch auch denkbar, dass keine der Kanten oder nur zwei, insbesondere gegenüberliegende, Kanten derartige Verbindungsmittel aufweisen.

Im vorliegenden Fall verlaufen die Nut 4 und Feder 3 jeweils mittig über die gesamte Länge der Kanten 1a, 2a. Grundsätzlich sind in Anpassung an den Verwendungszweck variable Dimensionen und Positionen der Nuten 4 und Federn 3 möglich. Lediglich beispielsweise genannt werden Abmessungen im Querschnitt rechteckiger Federn von 15 mm oder 12 mm Höhe sowie 15 mm Breite. Die zugehörigen Nuten weisen entsprechende Abmessungen auf.

Die Dämmplatten 1, 2 weisen jeweils eine Fläche 5, 6 auf, die mit einem Untergrund zu verkleben ist. Im vorliegenden Beispiel ist die mit der Feder 3 versehene Längskante 1a der Dämmplatte 1 in ihrem an die Feder 3 anschließenden, der zu verklebenden Fläche 5 zugeordneten Bereich mit einer Vertiefung 7 versehen, die beispielsweise durch Hinterfräsen des Polystyrol-Hartschaums werden kann. Die Vertiefung 7 erstreckt sich in dem vorliegenden Beispiel vollständig über den an die Feder 3 anschließenden, der zu verklebenden Fläche 5 zugeordneten Bereich der Längskante 1a. Bei miteinander verbundenen Dämmplatten 1, 2, wie in Figur 1 dargestellt, besteht im vorliegenden Beispiel somit in dem an die Nut 4 und Feder 3 anschließenden, den zu verklebenden Flächen 5, 6 zugeordneten Bereich der Längskanten 1a, 2a ein Spalt 8 zwischen den Dämmplatten 1, 2. Im vorliegenden Beispiel ist eine Vertiefung 7 von 2 mm Tiefe und somit ein Spalt 8 von etwa 2 mm zwischen den Dämmplatten 1, 2 vorgesehen.

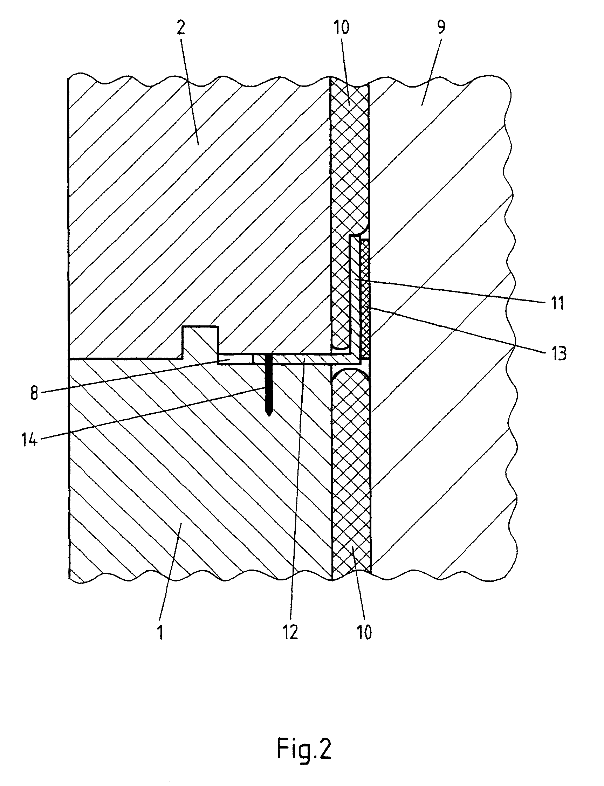

In Figur 2 sind die in Figur 1 dargestellten Dämmplatten 1, 2 im auf einen Untergrund 9 verklebten Zustand dargestellt. Bei dem Untergrund 9 handelt es sich vorliegend um eine vertikale Gebäudeaußenwand. Im Folgenden wird das Verfahren zum Verkleben der Dämmplatten 1, 2 auf dem Untergrund 9 beschrieben.

Zum Verkleben der Dämmplatten 1, 2 auf dem Untergrund 9 wird in dem vorliegenden Beispiel ein schwachexpandierender, einkomponentiger Polyurethanschaum auf Basis Isocyanaturethan-Prepolymer der Baustoffklasse schwer entflammbar B1 nach DIN 4102, Teil 1 verwendet. Der Klebeschaum 10 besitzt im vorliegenden Beispiel eine Rohdichte im geschäumten Zustand von ca. 20 bis 28 kg/m³, eine Wärmeleitfähigkeit von 0,040 W/(m·K) gemäß DIN 52 612 und eine Druckspannung bei 10 % Stauchung von 25 kPa. Ein solcher Klebeschaum 10 ist beispielsweise unter dem Namen Brillux PUR-Füllschaum 3555 verfügbar und weist vorteilhafte Eigenschaften bezüglich Verarbeitbarkeit, Aushärteverhalten sowie Klebe- und Dämmverhalten auf.

Der Polyurethan-Klebeschaum 10 wird im vorliegenden Beispiel von Hand mittels einer Dosierpistole zunächst auf die zu verklebende Fläche 5 der Dämmplatte 1 aufgetragen. Dies kann partiell oder vollflächig erfolgen. Der Klebeschaum 10 wird dazu in komprimierter Form in Metalldosen bereitgestellt. Die Dosen können Größen von beispielsweise 500 ml oder 750 ml aufweisen. Es sind jedoch auch sämtliche anderen Standard- oder Sondergrößen denkbar. Die Metalldose weist eine Schraubverbindung auf, die mit einer handelsüblichen Ausbringpistole oder einem Ausbringröhrchen zum Ausbringen des Schaums 10 verbunden wird. Beim Ausströmen des Klebeschaums 10 aus den Dosen expandiert dieser durch Aufschäumen.

Nach dem Auftragen des Klebeschaums 10 auf die zu verklebende Fläche 5 wird die Dämmplatte 1 mit ihrer Fläche 5 mit dem Untergrund 9 in Kontakt gebracht, so dass sich zwischen dem Untergrund 9 und der Fläche 5 der den Kontakt vermittelnde Klebeschaum 10 befindet. Die Schaumstruktur des Klebeschaums 10 wird dabei nicht zerstört. Nach dem in Kontakt bringen verläuft die Längskante 1a der Dämmplatte 1 im Wesentlichen horizontal, und die an der Längskante 1a vorgesehene Feder 3 weist in Richtung des oberen Endes der Gebäudewand.

Unmittelbar anschließend wird mindestens ein Fixiermittel, bestehend aus einem ersten Schenkel 11 und einem zu dem ersten Schenkel 11 rechtwinklig angeordneten zweiten Schenkel 12 an dem Untergrund 9 befestigt. Dazu ist der erste Schenkel 11 auf seiner Außenseite mit einem doppelseitigen Klebeband 13 versehen. Alternativ kann die Außenseite des ersten Schenkels 11 mit einer Schicht eines hochviskosen Klebers, insbesondere eines Gelklebers auf Acrylatbasis versehen sein. Die eine Seite des Klebebands 13 ist auf der Außenseite des Schenkels 11 aufgeklebt, während die andere Seite des Klebebands 13 mit einer Schutzschicht versehen ist. Zur Befestigung des Schenkels 11 an dem Untergrund 9 wird die Schutzschicht von dem Klebeband 13 abgezogen und das Fixiermittel wird mit dem ersten Schenkel 11 oberhalb der Dämmplatte 1 und angrenzend an diese derart auf dem Untergrund 9 angeklebt, dass der zweite Schenkel 12 eine im Wesentlichen horizontale, geringfügig oberhalb der Vertiefung 7 der Dämmplatte 1 verlaufende Auflagefläche bildet.

Die Dämmplatte 1 wird nun für ihre exakte endgültige Positionierung auf dem Untergrund 9 ausgerichtet und mit ihrer Vertiefung 7 mit der Unterseite des zweiten Schenkels 12 in Anlage gebracht. Dabei wird zur Fixierung der Dämmplatte 1 auf dem Untergrund 9 ein Kunststoff- oder Metallnagel 14 in die mit der Vertiefung 7 versehene Längskante 1a der Dämmplatte 1 eingestochen. Auf diese Weise wird verhindert, dass die Dämmplatte 1 aufgrund einer Expansion bzw. Nachexpansion des Klebeschaums 10 von dem Untergrund 9 abgedrückt wird und somit aus ihrer vorgesehenen Lage bewegt wird. Vielmehr erfolgt eine Nachexpansion des Klebeschaums 10 gegebenenfalls in seitlicher Richtung parallel zum Untergrund 9.

Im vorliegenden Beispiel weisen die Schenkel 11, 12 des Fixiermittels jeweils eine Länge von etwa 40 mm und eine Breite von etwa 20 mm auf. Die Schenkel 11, 12 weisen in Anpassung an die Vertiefung 7 bzw. den Spalt 8 eine Dicke von etwa 2 mm auf. Andere Dimensionen sind jedoch möglich. Das Fixiermittel kann beispielsweise aus Kunststoff oder Metall, insbesondere Leichtmetall, bestehen. Der Nagel 14 kann beispielsweise eine Länge von 25 mm aufweisen.

Anschließend wird die zweite Dämmplatte 2 auf ihrer zu verklebenden Fläche 6 ebenfalls mit Klebeschaum 10 versehen und mit dieser Fläche 6 mit dem Untergrund 9 in Kontakt gebracht. Der zwischen Untergrund 9 und Fläche 6 befindliche Klebeschaum 10 vermittelt wiederum den Kontakt. Dabei wird die an der Platte 1 vorgesehene Feder 3 mit der an der Platte 2 vorgesehenen Nut 4 in Eingriff gebracht. Im Bereich des an dem Untergrund 9 befestigten Schenkels 11 des Fixiermittels wird der Klebeschaum 10 in die angrenzenden Bereiche verdrängt, so dass die äußeren Oberflächen der Platten 1, 2 bündig abschließen. Die Dämmplatte 2 wird durch die Nut- und Federverbindung mit der Dämmplatte 1 in ihrem unteren Bereich lagefest gehalten, so dass eine Expansion bzw. Nachexpansion des Klebeschaums 10 zu keinem Abdrücken der Platte 2 von dem Untergrund 9 in diesem Bereich führen kann. An der nicht dargestellten, der mit der Nut 4 versehenen gegenüberliegenden Längskante der Platte 2 ist mindestens ein zu dem bezüglich der Platte 1 erläuterten Fixiermittel analoges Fixiermittel vorgesehen.

Der zweite Schenkel 12 des Fixiermittels sitzt in dem Spalt 8 zwischen den Dämmplatten 1, 2, so dass trotz des vorgesehenen Fixiermittels ein von der Gebäudeaußenseite gesehen im Wesentlichen fugenloses Verkleben der Dämmplatten 1, 2 auf dem Untergrund 9 möglich ist.

Nach dem Aufkleben der Dämmplatten 1, 2 wird der Klebeschaum 10 über eine Trocknungszeit ausgehärtet.

Grundsätzlich ist es möglich, mehrere Fixiermittel an einer Längskante 1a, 2a der Dämmplatten 1, 2 vorzusehen. Es ist auch möglich, zusätzlich oder alternativ an den Querkanten der Dämmplatten 1, 2 entsprechende Fixiermittel anzuordnen. Auch das Anbringen von Fixiermitteln an der Unterseite der Dämmplatten 1, 2 kann zweckmäßig sein. Dabei können jeweils zweckmäßige Vertiefungen für die Fixiermittel vorgesehen sein, bzw. beispielsweise durch Schmelzen oder Schneiden erstellt werden.

Das Verkleben der Dämmplatten 1, 2 erfolgt bei Wärmedämm-Verbundsystemen an dem Untergrund 9, beispielsweise einer Gebäudewand, in der Regel von unten nach oben. Die unkontrollierte Nachexpansion des Klebeschaums 10 im unteren Bereich der ersten, also untersten Dämmplattenreihe wird durch die Aufkantung der in der Regel dort verbauten Sockelprofile unterbunden. Sofern ohne Sockelprofile gearbeitet wird, können die Dämmplatten 1,2 mit Winkelfixiermitteln oder Dämmstoffklammern oder anderen Fixiermitteln (Nägel, Klammern, Dübel, Schraubzwingen etc.) fixiert werden. Dies gilt auch für die letzte, also oberste Dämmplattenreihe, zum Beispiel am Dachanschluss.

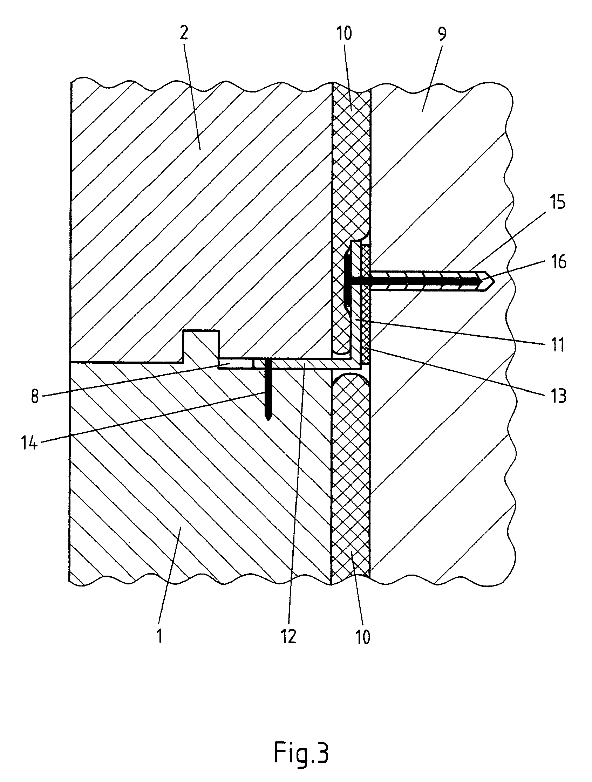

In Figur 3 sind die in Figur 1 dargestellten Dämmplatten 1, 2 im auf einen Untergrund 9 verklebten Zustand gemäß einer anderen Ausgestaltung dargestellt.

Die erste Dämmplatte 1 wird in zu der Ausgestaltung gemäß Figur 2 analoger Weise auf dem Untergrund 9 verklebt. Die Ausgestaltung gemäß Figur 3 unterscheidet sich hinsichtlich des Verklebens der Platten 1, 2 von der in Figur 2 dargestellten Ausgestaltung lediglich in der Ausgestaltung des Fixiermittels. Das Fixiermittel gemäß Figur 3 weist wiederum zwei zueinander rechtwinklig angeordnete Schenkel 11, 12 auf. Gemäß dem in Figur 3 dargestellten Beispiel wird der erste Schenkel 11 in zu der Ausgestaltung gemäß Figur 2 analoger Weise mittels doppelseitigem Klebeband 13 an dem Untergrund 9 befestigt. Zusätzlich ist der erste Schenkel 11 gemäß Figur 3 jedoch mit einer Bohrung versehen. An der der Bohrung bei befestigtem Schenkel 11 zugeordneten Position des Untergrunds 9 ist ein Dübel 15 in den Untergrund 9 eingelassen. Zusätzlich zu dem Befestigen des Schenkels 11 auf dem Untergrund 9 mittels des doppelseitigen Klebebands 13 wird bei der in Figur 3 dargestellten Ausgestaltung der Schenkel 11 mittels eines durch die Bohrung des Schenkels 11 geführten, in den Dübel 15 eingeführten Befestigungsmittels 16, insbesondere eines Nagels, befestigt. Grundsätzlich können als Dübel 16 beispielsweise Spiral-, Steck-, Schraub- oder Schlagdübel eingesetzt werden.

Durch diese Ausgestaltung wird eine besonders hohe Belastbarkeit der Befestigung des ersten Schenkels 11 erreicht. Die Befestigung des zweiten Schenkels 12 an der Dämmplatte 1 und das anschließende Verkleben der Dämmplatte 2 erfolgt wiederum in zu der Ausgestaltung gemäß Figur 2 analoger Weise.

Es ist sowohl bei der Ausgestaltung gemäß Figur 2 als auch bei der Ausgestaltung gemäß Figur 3 ebenso möglich, dass die Dämmplatten 1, 2 zuerst auf dem Untergrund 9 aufgebracht werden und mit Hilfe der Fixiermittel befestigt werden. In diesem Fall wird der Klebeschaum 10 erst anschließend durch die Dämmplatten 1, 2 hindurch, oder durch zwischen den Dämmplatten 1, 2 gegebenenfalls bestehende Fugen, zwischen die zu verklebenden Flächen 5, 6 der Dämmplatten 1, 2 und den Untergrund 9 injiziert. Dazu kann der Klebeschaum 10 beispielsweise über ein durch die Dämmplatten 1, 2 bzw. die Fugen gestoßenes, auf die Metalldosen bzw. ihre Ausbringpistole aufgesetztes Spritzrohr gefördert werden. Vorzugsweise wird eine entsprechende für das Spritzrohr vorgesehene Öffnung jedoch vor dem Befestigen der Dämmplatten in diese eingebracht.

Im Falle des nachträglichen Einbringens des Klebeschaums können Abstandhalter vorgesehen sein, die einen Abstand der Dämmplatten 1, 2 zu dem Untergrund 9 vor dem Injizieren des Klebeschaums 10 gewährleisten. In den somit bereitgestellten Freiraum zwischen den Dämmplatten 1, 2 und dem Untergrund 9 kann dann der Klebeschaum 10 injiziert werden. Es ist in diesem Fall auch denkbar, dass der auf dem Untergrund 9 befestigte erste Schenkel 11 des Fixiermittels selbst als Abstandhalter dient.

Gemäß allen beschriebenen Ausgestaltungen können eine Vielzahl von Dämmplatten 1,2 mit einem Untergrund 9 verklebt werden, so dass eine vollständige Dämmung beispielsweise einer Gebäudewand erreicht werden kann.

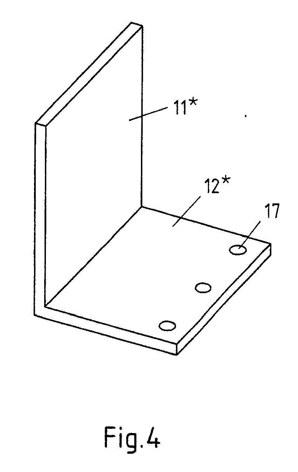

In Fig. 4 ist ein Vergleichsfixiermittel zur Fixierung einer Dämmplatte auf dem Untergrund, wie es in ähnlicher Form bereits in den Fig. 2 und 3 gezeigt ist, in gesonderter perspektivischer Ansicht dargestellt. Es umfasst wiederum einen ersten Schenkel 11*, über welchen es am Untergrund befestigt wird, und einen zweiten Schenkel 12*, welcher mit einer Längskante der Dämmplatte verbunden wird. Der zweite Schenkel 12* umfasst drei in einer Reihe parallel zur Außenkante des Schenkels 12* Löcher 17, durch welche Nägel, welche, wie in den Fig. 2 und 3 dargestellt, in eine Längskante der Dämmplatte eingestochen werden, gesteckt sind.

Das Vergleichsfixiermittel gemäß Fig. 4 weist einen ca. 45 mm langen ersten Schenkel 11* und einen ca. 30 mm langen zweiten Schenkel 12* auf. Die Breite der Schenkel 11*, 12* beträgt jeweils ca. 40 mm.

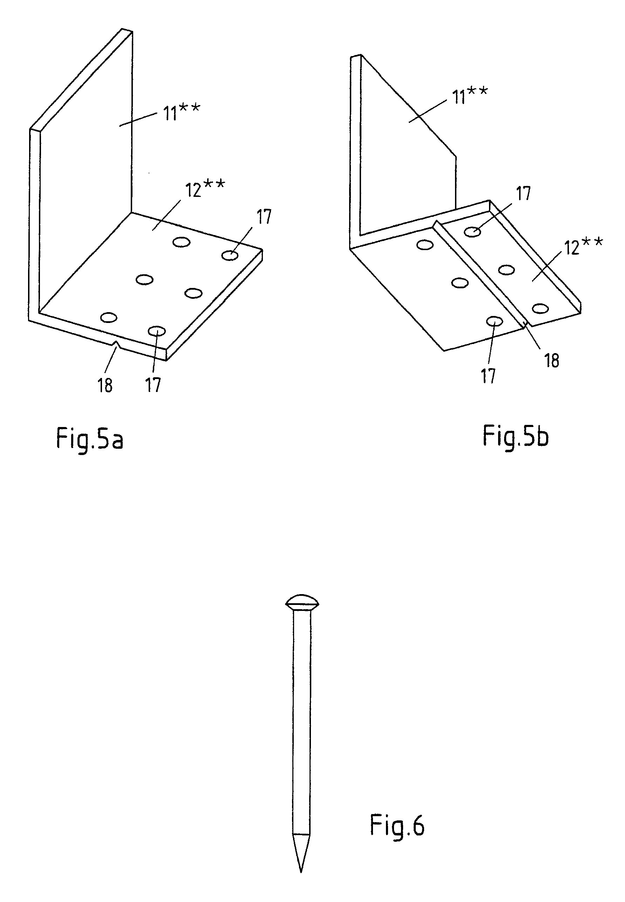

In Fig. 6 ist ein Nagel dargestellt, welcher durch die Löcher 17 durchgesteckt und in die Dämmplatte an deren Längskante eingestochen werden kann. Dieser hat eine Länge von vorzugsweise ca. 60 mm. Der Nagel weist einen ellipsenförmigen Kopf auf, so dass er bei Bedarf leicht aus der Dämmplatte wieder entfernt werden kann. Zweckmäßigerweise sind der Nagel sowie das Fixiermittel aus dem gleichen Werkstoff, insbesondere einem Kunststoff, hergestellt.

Das in den Fig. 5a und 5b dargestellte erfindungsgemäße Fixierelement umfasst in seinem zweiten Schenkel 12** zwei parallel angeordnete durch jeweils drei Löcher gebildete Lochreihen. Zwischen den Lochreihen ist eine Sollbruchkante 18 in den zweiten Schenkel 12** des Fixierelements eingeformt. Bei einer sehr dünnen Dämmplatte mit in den Längskanten vorgesehener Nut bzw. Feder kann somit der zweite Schenkel 12** in sehr einfacher Weise durch Abbrechen des äußeren Teils des Schenkels 12** derart verkürzt werden, dass dieser im fixierten Zustand der Dämmplatte nicht die Nut ganz oder teilweise abdeckt bzw. mit der Feder kollidiert. Es versteht sich, dass auf dem zweiten Schenkel 12** auch mehrere Sollbruchkanten vorgesehen sein können.

Nicht dargestellt ist ein weiteres erfindungsgemäßes Fixierelement, welches eine weitere Sollbruchkante unmittelbar an der Berührungskante der beiden Schenkel aufweist. Bei einem derart ausgestalteten Fixierungselement kann nach hinreichender Aushärtung des Klebers und Entfernung des oder der Nägel der gesamte zweite Schenkel abgebrochen werden, so dass beispielsweise unterhalb der Dämmplatte ein Tropfkantenprofil und/oder andersgeartete Dämmplatten, insbesondere Sockel- und Perimeterdämmplatten, angebracht werden können.

## Patentansprüche

1. Fixiermittel zum Fixieren einer Dämmplatte (1,2) auf einem Untergrund (9), wobei das Fixiermittel zwei winklig, insbesondere rechtwinklig, zueinander angeordnete Schenkel (11**,12**) aufweist, wobei zum Fixieren der Dämmplatte (1,2) der erste Schenkel (11**) an dem Untergrund (9) befestigbar ist, und der zweite Schenkel (12**) an der Dämmplatte (1,2) befestigbar ist,
**dadurch gekennzeichnet, dass** der zweite Schenkel (12**) wenigstens eine im wesentlichen parallel zur Außenkante des Schenkels (12**) verlaufende Sollbruchkante (18) aufweist.

2. Fixiermittel nach Anspruch 1,
**dadurch gekennzeichnet, dass** das die Sollbruchkante (18) als Dreiecksnut ausgebildet ist.

3. Fixiermittel nach Anspruch 1 oder 2,
**dadurch gekennzeichnet, dass** der erste Schenkel (11**) ein Klebemittel umfasst mittels dessen er an dem Untergrund (9) befestigbar ist.

4. Fixiermittel nach Anspruch 3,
**dadurch gekennzeichnet, dass** das Klebemittel als doppelseitig klebendes Klebeband (13) ausgebildet ist.

5. Fixiermittel nach Anspruch 3, **dadurch gekennzeichnet, dass** das Klebemittel als hochviskoser Klebstoff, insbesondere als Gelkleber, ausgebildet ist.

6. Fixiermittel nach einem der Ansprüche 1 bis 5,
**dadurch gekennzeichnet, dass** der zweite Schenkel (12**) einen Dorn aufweist, der zum Befestigen des zweiten Schenkels (12**) an der Dämmplatte (1,2) in die Dämmplatte (1,2) eindrückbar ist.

7. Fixiermittel nach einem der Ansprüche 1 bis 6,
**dadurch gekennzeichnet, dass** der zweite Schenkel (12**) wenigstens eine Bohrung zum Durchstecken eines Befestigungsmittels, insbesondere eines Stifts oder Nagels, aufweist.

8. Fixiermittel nach einem der Ansprüche 1 bis 7,
**dadurch gekennzeichnet, dass** das Fixiermittel in seinem zweiten Schenkel (12**) zwei parallel angeordnete Lochreihen umfasst, wobei die Sollbruchkante (18) zwischen den Lochreihen in den zweiten Schenkel (12**) eingeformt ist.

9. Fixiermittel nach einem der Ansprüche 1 bis 8,
**dadurch gekennzeichnet, dass** das Fixiermittel eine weitere Sollbruchkante unmittelbar an der Berührungskante der beiden Schenkel (11**, 12**) aufweist.

## Claims

1. A fixing means for fixing an insulation panel (1, 2) to a base (9), said fixing means comprising two legs (11**, 12**) arranged at an angle, in particular at right angles relative to each other, the first leg (11**) being attachable to the base (9) and the second leg (12**) being attachable to the insulation panel (1, 2) for fixing the insulation panel (1, 2),
**characterized in that** said second leg (12**) has at least one break-off edge (18) extending substantially parallel to the outer edge of the leg (12**).

2. The fixing means according to claim 1,
**characterized in that** said break-off edge (18) is formed as a triangular groove.

3. The fixing means according to claim 1 or 2,
**characterized in that** said first leg (11**) comprises an adhesive means, by means of which it can be attached to the base (9).

4. The fixing means according to claim 3,
**characterized in that** said adhesive means is in the form of a double-sided adhesive tape (13).

5. The fixing means according to claim 3,
**characterized in that** said adhesive means is in the form of a highly viscous adhesive, particularly an adhesive gel.

6. The fixing means according to one of claims 1 to 5,
**characterized in that** said second leg (12**) has a spike which can be pressed into the insulation panel (1, 2) for attaching the second leg (12**) to the insulation panel (1, 2).

7. The fixing means according to one of claims 1 to 6,
**characterized in that** said second leg (12**) has at least one bore for inserting a fastening means, in particular a pin or a nail.

8. The fixing means according to one of claims 1 to 7,
**characterized in that** said fixing means has in its second leg (12**) two rows of holes arranged in parallel, said break-off edge (18) being formed into said second leg (12**) between the rows of holes.

9. The fixing means according to one of claims 1 to 8,
**characterized in that** said fixing means has another break-off edge adjacent to the joining edge of the two legs (11**, 12**).

## Revendications

1. Moyen de fixation destiné à fixer une plaque isolante (1, 2) sur un soubassement (9), le moyen de fixation présentant deux ailes (11**, 12**) disposées l'une par rapport à l'autre en coude et en particulier en coude droit, la première aile (11**) pouvant être fixée sur le soubassement (9) pour fixer la plaque isolante (1, 2) et la deuxième aile (12**) pouvant être fixée sur la plaque isolante (1, 2),
**caractérisé en ce que**
la deuxième aile (12**) présente au moins une ligne de rupture préférentielle (18) qui s'étend essentiellement en parallèle au bord extérieur de l'aile (12**).

2. Moyen de fixation selon la revendication 1, **caractérisé en ce que** la ligne de rupture préférentielle (18) est configurée sous la forme d'une rainure triangulaire.

3. Moyen de fixation selon les revendications 1 ou 2, **caractérisé en ce que** la première aile (11**) comprend un adhésif qui permet de la fixer sur le soubassement (9).

4. Moyen de fixation selon la revendication 3, **caractérisé en ce que** l'adhésif est configuré sous la forme d'un ruban adhésif double face (13).

5. Moyen de fixation selon la revendication 3, **caractérisé en ce que** l'adhésif est configuré comme adhésif à haute viscosité et en particulier comme adhésif gélifié.

6. Moyen de fixation selon l'une des revendications 1 à 5, **caractérisé en ce que** la deuxième aile (12**) présente un goujon qui peut être enfoncé dans la plaque isolante (1, 2) pour fixer la deuxième aile (12**) sur la plaque isolante (1, 2).

7. Moyen de fixation selon l'une des revendications 1 à 6, **caractérisé en ce que** la deuxième aile (12**) présente au moins un alésage qui peut être traversé par un moyen de fixation, en particulier une tige ou un clou.

8. Moyen de fixation selon l'une des revendications 1 à 7, **caractérisé en ce que** le moyen de fixation comprend dans sa deuxième aile (12**) deux rangées de trous disposées en parallèle, la ligne de rupture préférentielle (18) étant formée dans la deuxième aile (12**) entre les rangées de trous.

9. Moyen de fixation selon l'une des revendications 1 à 8, **caractérisé en ce que** le moyen de fixation présente une autre ligne de rupture préférentielle ménagée directement sur le bord de contact entre les deux ailes (11**, 12**).
